(19) Europäisches Patentamt
European Patent Office
Office européen des brevets

(11) **EP 1 992 056 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(21) Anmeldenummer: 07712011.1

(22) Anmeldetag: **11.01.2007**

(51) Int Cl.:
*H02K 33/04* (2006.01)        *H02P 25/02* (2006.01)
*H02P 25/06* (2006.01)

(86) Internationale Anmeldenummer:
**PCT/EP2007/050230**

(87) Internationale Veröffentlichungsnummer:
**WO 2007/098973 (07.09.2007 Gazette 2007/36)**

(54) **VERFAHREN ZUM PRÄDIKTIVEN REGELN EINES LINEARANTRIEBS BZW. EINES LINEARVERDICHTERS SOWIE PRÄDIKTIV GEREGELTER LINEARANTRIEB BZW. LINEARVERDICHTER**

METHOD FOR THE PREDICTIVE CLOSED-LOOP CONTROL OF A LINEAR DRIVE OR OF A LINEAR COMPRESSOR AND LINEAR DRIVE OR LINEAR COMPRESSOR SUBJECT TO PREDICTIVE CLOSED-LOOP CONTROL

PROCEDE DE REGULATION PREDICTIVE D'UN ENTRAÎNEMENT LINEAIRE OU COMPRESSEUR LINEAIRE A REGULATION PREDICTIVE, ET UN ENTRAÎNEMENT LINEAIRE OU COMPRESSEUR LINEAIRE A REGULATION PREDICTIVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.02.2006 DE 102006009259**

(43) Veröffentlichungstag der Anmeldung:
**19.11.2008 Patentblatt 2008/47**

(73) Patentinhaber: **BSH Bosch und Siemens Hausgeräte GmbH**
**81739 München (DE)**

(72) Erfinder: **REINSCHKE, Johannes**
**90419 Nürnberg (DE)**

(56) Entgegenhaltungen:
**JP-A- 10 127 078        US-A- 5 980 211**
**US-A1- 2005 231 706**

**Beschreibung**

Die Erfindung betrifft ein Verfahren zum Regeln eines Linearantriebs, der einen Stator, einen darin entlang einer Antriebsachse hin und her beweglichen Läufer und eine von einem Spulenstrom durchflossene Antriebsspule aufweist, insbesondere für einen Linearverdichter, der ein Kolbengehäuse und einen darin entlang einer Kolbenachse, von dem Linearantrieb angetriebenen hin und her beweglichen Verdichterkolben aufweist, sowie eine Vorrichtung umfassend einen Linearantrieb, der einen Stator, einen darin entlang einer Antriebsachse hin und her beweglichen Läufer, eine von einem Spulenstroms durchflossene Antriebsspule und ein Mittel zum Regeln eines Spulenstroms aufweist, insbesondere für einen Linearverdichter, der den Linearantrieb, ein Kolbengehäuse und einen darin entlang einer Kolbenachse hin und her beweglichen, von dem Linearantrieb antreibbaren Verdichterkolben aufweist, sowie ein Verfahren zum Kühlen einer Ware und/oder zum Verdichten eines Fluids.

Bei einem Linearverdichter muss der entlang einer Achse zwischen einem ersten und einem zweiten Umkehrpunkt hin und her bewegliche Verdichterkolben in einer Richtung quer zur Achse gelagert bzw. geführt werden. Darüber hinaus muss die kinetische Energie des hin- und herbewegenden Verdichterkolbens an den Umkehrpunkten, d. h. an den Punkten, an denen sich die Bewegungsrichtung des Verdichterkolbens umkehrt, zwischengespeichert werden, um eine möglichst verlustarme Umkehr der Bewegungsrichtung des Verdichterkolbens zu ermöglichen. Durch die Umkehr der Bewegungsrichtung führt der Verdichterkolben in einem Kolbengehäuse eine oszillierende, im Wesentlichen translatorische Hin- und Herbewegung durch. Mit Hilfe der Hin- und Herbewegung wird ein Verdichtungsvorgang ausgeführt.

Bei der Führung des oszillierenden Verdichterkolbens wird zum Erreichen eines möglichst hohen Wirkungsgrads des Verdichters angestrebt, den Verdichterkolben möglichst nah an eine Ventilplatte des Kolbengehäuses heranzuführen, damit ein vor der Ventilplatte gebildetes Totvolumen möglichst klein gehalten wird. Hierbei muss jedoch ein Anschlagen des Verdichterkolbens an der Ventilplatte vermieden werden, da ein Anschlagen des Verdichterkolbens zu einer Beschädigung des Verdichterkolbens oder der Ventliplatte führen kann. Darüber hinaus kann eine Kolbenstange zur Kraftübertragung zwischen Verdichter kolben und Linearantrieb brechen, weiches ebenso zu einer Funktlonsunttichtigkeit des Llnearverdichters führt. Aus diesem Grund sollte zwischen dem Verdichterkolben und der Ventilplatte stets ein Sicherheitsabstand eingehalten werden.

Es ist daher Ziel, die Ankerschwingung möglichst gleichmäßig und mit einem möglichst kleinen Totvolumen vor der Ventilplatte auszugestalten, ohne dass der Verdfchterkoiben an der Ventilplatte anschlägt.

Bekannte Linearantriebe erfordern häufig entweder eine genaue Abstimmung der einzelnen beweglichen mechanischen Komponenten aufeinander oder erfordern ein temporäres Abbremsen der bewegenden Teile mit dem Linearantrieb, um die Bewegung hinreichend präzise kontrollieren zu können. Die Feinabstimmung des Verdichters ist jedoch aufwändig und das Abbremsen mit dem Linearantrieb mindert seinen Wirkungsgrad.

In der Offeniegungsschrift DE 24 17 443 ist offenbart, einen Spulenstrom des Linearantriebs über eine Konverterschaltung (H-Brücke) In Phase mit einer natürlichen Ankerschwingung zu schalten. Aus der WO 01/48379 A1 und US 2003/0021693 A1 ist bekannt, die Zeitpunkte zu messen, bei denen ein Kolben eine vorgegebene Position in der Nähe eines oberen Umkehrpunktes durchfährt. Die Spannungsamplitude an der Antriebsspule wird entsprechend der Zeitmessung adaptiert bzw. geregelt, wobei mit Hilfe einer H-Brücke die Spannung an der Antriebsspule vorgegeben wird. WO 01/71186 A2 und WO 03/081040 A1 beschreiben spezielle Positionssensoren in Linearverdichtern.

Die US5980211 offenbart einen Linearverdichter mit einer Stromregelung.

Es ist daher Aufgabe der vorliegenden Erfindung, ein Verfahren zum Regeln eines Linearantriebs bzw. eines Unearverdichters sowie einen Linearantrieb bzw. Linearverdichter umfassend diesen Linearantrieb anzugeben, womit eine Hin- und Herbewegung eines Läufers bzw. eines Verdichtericolbens möglichst präzise und mit möglichst einfachen Mitteln effizient geregelt werden kann, wobei der beim Antreiben bzw. bei einer Verdichtung erhältliche Wirkungsgrad möglichst groß sein soll.

Weiterhin ist es Aufgabe, ein besonders Verfahren zum Kühlen einer Ware bzw. Verdichten eines Fluids anzugeben, welches mit einem möglichst großen Wirkungsgrad zuverlässig und energiesparsam arbeitet.

Diese Aufgabe wird erfindungsgemäß gelöst durch das Verfahren zum Regeln eine Linearantriebs bzw. eines Linearverdichters gemäß Anspruch 1, und durch die Vorrichtung umfassend einen Linearantrieb bzw. einen Linearverdichter gemäß Anspruch 13.

Weitere vorteilhafte Ausgestaltungen und Weiterbildungen, sowie eine Anwendung zum Kühlen einer ware und/oder zum Verdichten eines Fluids, sind Gegenstand der jeweilig abhängigen Ansprüche.

Das erfindungsgemäße Verfahren zum Regeln eines Linearantriebs, der einen Stator, einen darin entlang einer Antriebsachse hin und her beweglichen Läufer und eine von einem Spulenstrom durchflossene Antriebsspule aufweist, Insbesondere für einen Linearverdichter, der ein Kolbengehäuse und einen darin entlang einer Kolbenachse von dem Linearverdichter angetriebenen, hin- und her beweglichen Verdichterkolben aufweist, sieht vor, dass der Spulenstrom geregelt wird, und zwar derart, dass der Ist-Spulenstrom und der Soll-Spulenstrom Im Wesentlichen gleich sind, wobei während eines Einschwingvorgangs die Stromamplitude des Spulenstroms gesteuert wird.

Durch die Verwendung des Spulenstroms als Regelgröße können Netzspannungsschwankungen durch den Stromregler ausgeglichen werden. Externe wie Interne Spannungsschwankungen führen somit nicht unmittelbar zu einer Änderung des Magnetfeldes Im Linearantrieb, wodurch eine sehr viel höhere Präzision bei der Führung des Läufers bzw. des Verdlchterkolbens bewirkt wird. Damit wird Insbesondere eine höhere Positionierungsgenaulgkeit erreicht, die in Verbindung mit einem Linearverdichter zu einem verbesserten Wirkungsgrad aufgrund eines reduzierten Totvolumens für ein komprimierbares Fluid führt. Die verbesserte Kontrolle der Bewegung erlaubt beispielsweise, den Sicher heitsabstand zwischen einem Verdichterkolben und einer Ventilplatte am Linearverdichter zu verringern, Tieffrequente Störeinflüsse auf die Anker- bzw. Kolbenschwingung, die aus Schwankungen im Kühlkreislauf herrühren, sind im Vergleich zu einer Schwingungsperiode sehr langsam und können über eine entsprechende Anpassung der Stromregelung ausgeregelt werden.

Bei dem Verfahren können auch Einschwingvorgänge mitberücksichtigt werden, so dass der Unterschied zwischen Ist-Spulenstrom und Soll-Spulenstrom auch in den Transienten etwa bei Stromstufen klein bleibt.

Bei dem Verfahren wird der Ist-Spulenstrom als Regelgröße verwendet und mit einem Soll-Strom verglichen. Das Ergebnis dieses Vergleichs wird in Form von einer Regeldifferenz einem Regelglied zugeführt, wodurch der Ist-Spulenstrom dem Soll-Spulenstrom angepasst wird. Durch diese Stromregelung wird ein gegenphasiges Antreiben sicher vermieden. Durch das Vermeiden eines gegenphasigen Antreibens wird ein abbremsen der Hin- und Herbewegung durch den Linearantrieb ausgeschlossen. In der Folge wird die Bewegung des Linearantriebs effizienter und ein diesen Linearantrieb verwendender Linearverdichter kann mit einem höheren Wirkungsgrad betrieben werden.

In einer Weiterbildung wird ein Soll-Spulenstrom in Abhängigkeit einer momentanen und/oder zukünftigen Ist-Position des Läufers bzw. des Verdichterkolbens bestimmt. Die Ist-Position kann sowohl in Bezug auf den Läufer als auch in Bezug auf den Verdichterkolben mit Hilfe entsprechender Erfassungsmittel erfasst werden.

Die momentane und/oder zukünftige Ist-Position des Läufers bzw. des Verdichterkolbens kann in Abhängigkeit der letzten 2 bis 20, insbesondere 4 bis 10 Schwingungsperioden bestimmt werden.

Beispielsweise wird die Hin- und Herbewegung des Läufers bzw. des Verdichterkolbens mit Hilfe eines Positionssensors erfasst und es werden die in der unmittelbaren Zukunft liebenden Umkehrpunkte, d. h. die Punkte, an denen sich die Bewegungsrichtung des Läufers bzw. des Verdichterkolbens umkehrt, mit Hilfe einer Mittelung der Bewegung über die letzten 5 Schwingungsperioden vorausgesagt.

Alternativ wird die zukünftige Ist-Position unter Berücksichtigung eines Trends der Hin-und Herbewegung über die letzten 2 bis 20, insbesondere 4 bis 10 Schwingungsperioden antizipiert. In dieser Ausgestaltung wird beispielsweise eine Abnahme oder eine Zunahme einer Schwingungsamplitude bzw. des Verdichterkolbens mitberücksichtigt, um die zukünftige Ist-Position, wie z. B. einen ventilplattenseitigen Umkehrpunkt, zu bestimmen. Liegt dieser antizipierte ventilplattenseitige Umkehrpunkt zu dicht an der Ventilplatte, kann die Bewegung noch rechtzeitig durch Beeinflussung des Soll-Spulenstroms korrigiert werden und ein Anschlagen des Verdichterkolbens an der Ventilplatte verhindert werden.

Vorteilhafterweise wird ein potentieller zukünftiger Ist-Spulenstrom antizipiert und der momentane Soll-Spulenstrom unter Berücksichtigung der Vorhersage geregelt. Damit greift die Regelung in die Zukunft vor, wodurch die Wahrscheinlichkeit eines unkontrollierten Abweichens der Hin- und Herbewegung von einem gewünschten Bewegungsmuster reduziert wird. Beispielsweise kann hierdurch ein übermäßiger Spulenstrom, der eine Beschädigung der Antriebsspule zur Folge haben könnte, im Voraus erkannt und frühzeitig ausgeregelt werden.

In einer speziellen Ausgestaltung umfasst das Verfahren folgende Verfahrenschritte: Erfassen eines ersten Zeitpunktes, zu dem sich der Läufer und/oder der Verdichterkolben an einer ersten Stelle bei seiner Hinbewegung vorbeibewegt; Erfassen eines zweiten Zeitpunktes, zu dem sich der Läufer und/oder der Verdichterkolben an der ersten Stelle bei seiner Herbewegung vorbeibewegt; Erfassen eines dritten Zeitpunktes, zu dem sich der Läufer und/oder der Verdichterkolben an einer entlang der Achse zur ersten Stelle versetzten zweiten Stelle bei seiner Hinbewegung vorbeibewegt; Erfassen eines vierten Zeitpunktes, zu dem sich der Läufer und/oder der Verdichterkolben an der entlang der Achse zur ersten Stelle versetzten zweiten Stelle bei einer Hinbewegung vorbeibewegt; Berechnen einer momentanen und/oder zukünftigen Ist-Position des Läufers und/oder des Verdichterkolbens mittels Interpolation bzw. Extrapolation aus den Zeitpunkten; Vergleichen der berechneten Ist-Positionen mit den vorgegebenen Soll-Bewegungskurve; und Ansteuern des Läufers und/oder des Verdichterkolbens entsprechend dem Vergleichsergebnis. Diese Art der Ansteuerung kann im Prinzip auch bei anderen Stromregelungen angewendet werden, insbesondere auch dann, wenn keine Spulenstrom, sondern eine Spulenspannungsregelung vorgesehen ist.

Durch die Verwendung von mindestens zwei Stellen, an denen jeweils die Zeitpunkt der Hin- und Herbewegung erfasst werden, kann eine asymmetrische Bewegung des Läufers bzw. Verdichterkolbens, beispielsweise eine sägeformartig verzerrte Sinusschwingung, erfasst und bei der Regelung mitberücksichtigt werden. Eine Berücksichtigung asymmetrischer Schwingungsformen erhöht die genaue Bestimmung der Lage der Umkehrpunkte erheblich. Hierdurch kann eine besonders enge Führung des Ist-Spulenstroms an dem Soll-Spulenstrom erreicht werden. Beispielsweise werden die Zeitpunkte mit Hilfe zweier Lichtschranken erfasst.

Die Interpolation und/oder Extrapolation kann mit Hilfe von Approximationsfunktionen, insbesondere Kreisfunktionen wie Kosinus- oder Sinusfunktionen, Polynome oder Splines, erfolgen. Auch kann eine Logik verwendet werden, die anhand der Historie der Bewegung das Bewegungsverhalten des Läufers bzw. des Verdichterkolbens lernt und entsprechend Aussagen über das zukünftige Bewegungsverhalten machen kann. Mit Hilfe der Approximationsfunktionen kann die Position des Läufers bzw. des Verdichterkolbens als Funktion der Zeit rekonstruiert, bestimmt und/oder vorausgesagt werden, wobei insbesondere die Position des ersten und zweiten Umkehrpunktes sowie die Zeiten, wann diese durchfahren werden, berechnet werden können. In der Praxis von besonderem Nutzen bei Linearverdichtern ist die möglichst genaue Kenntnis der Lage des ventilplattenseitigen Umkehrpunktes.

Vorteilhafterweise erfolgt die Berechnung mit Hilfe einer ersten Approximationsfunktion, insbesondere einer Kreisfunktion mit einer ersten Phase, Frequenz und/oder Amplitude, für die Hinbewegung des Läufers bzw. des Verdichterkolbens und einer zweiten Approximationsfunktion insbesondere einer zweiten Kreisfunktion mit einer zweiten Phase, Frequenz und/oder einer Amplitude, für die Herbewegung des Läufers bzw. des Verdichterkolbens.

Durch die getrennte Behandlung der Hin- und Herbewegung kann auf einfache Weise eine asymmetrische Schwingungsform berücksichtigt werden. Asymmetrische Schwingungsformen treten bei Linearverdichtern durch die verrichtete mechanische Arbeit an einem zu komprimierenden Fluid auf, da während der Kompression Arbeit verrichtet wird, die anschließend aufgrund des Öffnens eines druckanschlussseitigen Ventils des Linearverdichters nicht wieder dem Verdichterkolben zugeführt wird.

Durch die Berücksichtigung von asymmetrischen Approximationsfunktionen, wie sie beispielsweise durch Aneinanderstückelung einer ersten und einer zweiten jeweils für sich symmetrischen Approximationsfunktion konstruiert werden können, wird die Genauigkeit bei der Bestimmung der ist-Position des Läufers bzw. des Verdichterkolbens weiter gesteigert.

Grundsätzlich können auch weitere Zeitpunkte erfasst werden, zu denen sich der Läufer und/oder der Verdichterkolben an weiteren Stellen vorbeibewegt, und bei der Regelung berücksichtigt werden. Durch eine Verwendung weiterer Stützstellen kann die ist-Position des Läufers bzw. des Verdichterkolbens präziser bestimmt werden.

In einer vorteilhaften Ausgestaltung wird der Spulenstrom mit Hilfe einer H-Brücke geschaltet. Eine H-Brücke ist eine Konverterschalten und umfasst In der Regel vier Transistoren, die H-förmig angeordnet sind. Mit Hilfe der H-Brücke kann ein Strom präzise geschaltet werden. Beispielsweise kann hiermit der Strom mit einer PWM-Steuerung (PWM: pulse width modulation) gesteuert bzw. geregelt werden.

Eine Antriebsspule kann mit einem Rechtecksignal angesteuert werden, wobei insbesondere das zeitliche Tastverhältnis (Duty Cycle) In einem Bereich von 73 % bis 87 %, insbesondere in einem Bereich von 78 % bis 82 %, liegt. Unter Tastverhältnis wird die Dauer des eingeschalteten Zustands der Antriebsspule zur gesamten Periodendauer verstanden.

Der Soll-Spulenstrom kann Im Wesentlichen rechteckförmig sein. Bei Umkehr der Bewegungsrichtung wird insbesondere der Soll-Spulenstrom zugeschaltet und nach einem Weg in einem Bereich von 91 % bis 98 %, insbesondere im Bereich von 87 % bis 93 %, wieder abgeschaltet. Hierbei wird die Amplitude des Soll-Spuleristroms vorteilhafterweise über zwei I-Regler (Jeweils einen für eine Hin- und Herbewegung, welches bei Linearverdlchtern einer Kompressions- und einer Expansionshalbwelle entspricht) so angepasst, dass die berechneten Umkehrpunkte mit den zugehörigen Soll-Werten möglichst gut übereinstimmen.

In einer speziellen Ausgestaltung wird während des Einschwingvorgangs die Stromamplitude des Spulenstroms derart gesteuert, dass sie monoton, vorzugsweise linear, gesteigert, wobei Insbesondere ein gesteuerter Betrieb in einen geregelten Betrieb übergeht, sobald die Stromamplitude und/oder Schwingungsamplitude der Hin- und Herbewegung des Läufers und/oder des Verdichterkolbens einen vorgegebenen Wert überschreitet.

Hierbei wird insbesondere zunächst auf einen ersten Umkehrpunkt und anschließend auf einen zweiten Umkehrpunkt der Hin- und Herbewegung eingeregelt. Durch eine regelungstechnisch getrennte Behandlung der Umkehrpunkte wird eine besonders hohe Zuverlässigkeit bei dem Übergang des gesteuerten In den geregelten Betrieb gewährleistet.

Durch ein derartiges Anfahrverhalten kann die Bewegung des Läufers bzw. des Vordichterkolbens sicher und zuverlässig in den stationären geregelten Betrieb überführt werden.

Die erfindungsgemäße Vorrichtung umfassend einen Linearantrieb, der einen Stator, einen darin einer Antriebsachse hin und her beweglichen Läufer, eine von einem Spulenstrom durchflossene Antriebsspule und ein Mittel zum Regeln eines Spulenstroms aufweist, insbesondere für einen Linearverdichter, der ein Kolbengehäuse und einen darin entlang einer Kolbenachse von dem Linearantrieb antreibbaren, hin- und her beweglichen Verdichterkolben aufweist, sieht vor, dass mit dem Mittel zum Regeln des Spulenstroms der Spulenstrom regelbar ist, und zwar derart, dass der Ist-Spulenstrom und der Soll-Spulenstrom Im Wesentlichen gleich sind, wobei während eines Einschwingvorgangs die Stromamplitude des Spulenstroms gesteuert wird.

Eine derartige Regelung sorgt für eine hohe Positlonlergenaulgkelt des Läufers bzw. des Verdichterkolbens, selbst wenn Netzschwankungen die Betriebsspannung beeinflussen und erlaubt somit eine besonders kontrollierte Bewegung des Läufers bzw. des Verdichterkolbens. Hierdurch kann ein Linearverdichter mit einem höheren Wirkungsgrad und damit energiesparsamer ais bislang bekannt betrieben werden.

Vorteilhafterweise weist das Mittel zum Regeln des Spulenstrom mindestens eines der folgenden Merkmale ($\beta$1) bis ($\beta$4) auf: ($\beta$1) es ist ein Mittel zum Vorhersagen eines künftigen Ist-Spulenstroms vorgesehen und der momentane Soll-Spulenstrom ist unter Berücksichtigung der Vorhersage regelbar; (β2) es ist ein Mittel zum Bestimmen eines Soll-Spulenstroms vorgesehen und ein Soll-Spulenstrom ist in Abhängigkeit einer momentanen und/oder zukünftigen Ist-Position des Läufers bzw. des Verdichterkolbens bestimmbar; (β3) ein Mittel zum Vorhersagen eines zukünftigen Ist-Spulenstroms ist vorgesehen, mit dem die momentane und/oder zukünftige Ist-Position des Läufers bzw. des Verdichterkolbens in Abhängigkeit der letzten 2 bis 20, insbesondere 4 bis 10 Schwingungsperioden bestimmbar ist; (β4) ein Mittel zum Vorhersagen eines zukünftigen Ist-Spulenstroms ist vorgesehen, mit dem die zukünftige Ist-Position unter Berücksichtigung eines Trends der Hin- und Herbewegung des Läufers und/oder des Verdichterkolbens, die letzten 2 bis 20, insbesondere 4 bis 10 Schwingungsperioden antizipierbar ist.

Hierbei sind beliebige Kombinationen der Merkmale (β1) bis (β4) vorteilhaft, wobei jedoch eine Kombination der Merkmale (β1) mit (β2) sowie (β1), (β2), (β3) und (β1) und (β3) bevorzugt sind..

In einer speziellen Ausgestaltung der Erfindung umfasst die Vorrichtung weiterhin ein erstes Erfassungsmittel zum Erfassen eines ersten Zeitpunktes, zu dem sich der Läufer und/oder der Verdichterkolben an einer ersten Stelle bei seiner Hinbewegung vorbeibewegt, und zum Erfassen eines zweiten Zeitpunktes, zu dem sich der Läufer und/oder der Verdichterkolben an der ersten Stelle bei seiner Herbewegung vorbeibewegt, ein zweites Erfassungsmittel zum Erfassen eines dritten Zeitpunktes, zu dem sich der Läufer und/oder der Verdichterkolben an einer entlang der Achse zur ersten Stelle versetzten zweiten Stelle bei seiner Hinbewegung vorbeibewegt, und zum Erfassen eines vierten Zeitpunktes, zu dem sich der Läufer und/oder der Verdichterkolben an der entlang der Achse zur ersten Stelle versetzten zweiten Stelle bei seiner Hinbewegung vorbeibewegt, ein Berechnungsmittel zum Berechnen einer momentanen und/oder zukünftigen Position des Läufers und/oder des Verdichterkolbens mittels Interpolation bzw. Extrapolation aus den momentanen und/oder vergangenen Zeitpunkten, ein Vergleichsmittel zum Vergleichen der berechneten Positionen mit einer vorgegebenen Bewegungskurve und ein Steuermittel zum Ansteuern des Läufers und/oder des Verdichterkolbens entsprechend dem Vergleichsergebnis.

Diese Modifikation kann im Prinzip auch auf andere Regelungen wie z.B. Spannungsregelungen angewendet werden, d.h. auch auf Regelungsarten, die keine Angleichung des Ist-Spulenstroms auf den Soll-Spulenstrom vorsehen.

Durch eine derartige Rückkopplung werden zwei feste Ankerpositionen innerhalb eines maximalen Ankerhubs gegeben und es werden die Zeiten gemessen, zu denen der Anker die Positionen durchfährt. Hierbei befindet sich vorteilhafterweise eine Messposition in der Nähe eines arbeitsseitigen, d. h. beispielsweise bei einem Linearverdichter ventilplattenseitigen, Umkehrpunkt der Anker- bzw. Kolbenschwingung. Mit der Vorrichtung kann die Bewegung des Läufers bzw. des Verdichterkolbens präziser erfasst bzw. vorgegeben werden und ein Betrieb der Vorrichtung mit dem Linearantrieb bzw. mit dem Linearverdichter kann mit einem höheren Wirkungsgrad ausgestaltet werden.

Mit Hilfe dieser weiteren Erfassungsmittel kann die Ist-Position des Läufers bzw. des Verdichterkolbens genauer erfasst werden und damit die Bewegung besser geregelt werden, jedoch erhöhen weitere Erfassungsmittel die Komplexität der Vorrichtung sowie des Regelalgorithmus.

Vorteilhafterweise ist eine H-Brücke zum Schalten des Spulenstroms vorgesehen. Mit Hilfe der H-Brücke können selbst vergleichsweise große Ströme von mehreren Ampere Stärke präzise geschaltet werden.

Die Regelung sieht vorteilhafterweise ein Tastenverhältnis (Duty Cycle) vor in einem Bereich von 73 % bis 87 %, insbesondere in einem Bereich von 78 % bis 82 %.

Es hat sich gezeigt, dass die Lage des Umkehrpunktes umso weniger schwankt, je größer das Tastverhältnis gewählt wird. Das Tastverhältnis muss jedoch kleiner als 1 sein, da der Ist-Spulenstrom den Soll-Spulenstrom bei dem Soll-Strom nicht perfekt folgt und eine gewisse Zeit zum Ein- bzw. Ausschwingen benötigt. Diese Ein- bzw. Ausschwingzeit hängt von der Größe des Soll-Spulenstrom-Sprungs, der (gleichgerichteten) Betriebsspannung der H-Brücke von der Induktivität und dem ohmschen Widerstand der Antriebsspule sowie von den Stromreglerparametern ab. Ein zeitliches Abtastverhältnis von etwa 80 % ist vorteilhaft, da hier ein günstiger Kompromiss zwischen den beiden konkurrierenden Effekten gefunden wird.

Das Berechnungsmittel kann ein Mittlungsmittel aufweisen, wodurch eine momentane und/oder zukünftige Ist-Position in Abhängigkeit der letzten 2 bis 20, insbesondere 4 bis 10, Schwingungsperioden bestimmbar ist. Dabei wird aus den vergangenen Schwingungen ein typisches Bewegungsverhalten erzeugt, mit dem die Schwingungen in die Zukunft extrapoliert werden können. Hierbei werden insbesondere die Lagen der Umkehrpunkte bestimmt. Durch eine Mittlung können Messfehler bei der Bestimmung der Zeitpunkte bzw. bei der Positionsbestimmung des Läufers bzw. Verdichterkolbens reduziert werden. Die Mittlung erlaubt eine genauere Vorhersage der zukünftigen Positionen der Umkehrpunkte.

Die Vorrichtung kann ein Kühlgerät, insbesondere einen Kühl- und/oder Gefrierschrank oder eine Klimaanlage, wie z. B. eine Klimaanlage für ein Kraftfahrzeug, sein.

In einer Weiterbildung sind weitere Erfassungsmittel zum Erfassen weiterer Zeitpunkte, zu denen sich der Läufer und/oder der Verdichterkolben an einer weiteren Stelle bei einer Hin- bzw. Herbewegung vorbeibewegt vorgesehen.

Vorteilhafterweise ist mindestens eines der Erfassungsmittel zum Erfassen der Zeitpunkte, zu dem sich der Läufer und/oder der Verdichterkolben an einer Stelle bei seiner Hinbewegung vorbeibewegt, an einer Stelle zwischen

EP 1 992 056 B1

20 % und 10 %, insbesondere zwischen 17% und 12 %, des Abstands zwischen den beiden Umkehrpunkten vor einem Umkehrpunkt angeordnet. Je näher das Erfassungsmittel an den Umkehrpunkten angeordnet ist, desto genauer kann die Lage des Umkehrpunkts festgestellt werden. Befindet sich das Erfassungsmittel jedoch zu nahe an einem Umkehrpunkt, wird die Bewegung des Läufers bzw. des Verdichterkolbens während des Einschwingvorgangs zu spät erfasst und die Regelung kann nicht mehr rechtzeitig eingreifen, um ein Anschlagen abzuwenden. Es hat sich gezeigt, dass es vorteilhaft ist, das Erfassungsmittel insbesondere 15% des Abstands zwischen den beiden Umkehrpunkten vor einem Umkehrpunkt anzuordnen, um eine ausgewogene Balance zwischen den beiden Aspekten zu erhalten.

Das erfindungsgemäße Verfahren zum Kühlen einer Ware und/oder zum Verdichten eines Fluids verwendet die erfindungsgemäße Vorrichtung und/oder das erfindungsgemäße Regelungsverfahren. Aufgrund der gesteigerten Effizienz bei der Regelung des Linearantriebs bzw. des Linearverdichters und dem einhergehenden gesteigerten Wirkungsgrad im Betrieb kann das Verfahren zum Kühlen einer Ware bzw. zum Verdichten eines Fluids besonders einfach und effizient durchgeführt werden, so dass die Ware bei einem großen Wirkungsgrad zügig, zuverlässig und energiesparsam gekühlt bzw. das Fluid bei einem großen Wirkungsgrad zügig, zuverlässig und energiesparsam verdichtet wird.

Weitere vorteilhafte Einzelheiten und spezielle Ausgestaltungen werden anhand der folgenden Zeichnung, welche die Erfindung nicht einschränken sondern lediglich exemplarisch illustrieren soll, weiter erläutert.

Es zeigen schematisch:

Fig. 1 Eine erfindungsgemäße Vorrichtung in einer Schnittansicht, die als Linearverdichter ausgestaltet ist;

Fig. 2 einen Kühlschrank umfassend eine erfindungsgemäße Vorrichtung nach Fig. 1.

Fig. 3 ein Schaltbild für einen erfindungsgemäßen Linearverdichter bzw. einen Linearantrieb;

Fig. 4 Eineinhalb Schwingungsperioden einer Hin- und Herbewegung eines Läufers bzw. eines Verdichterkolbens;

Fig. 5 eine Graphik, in der der zeitliche Verlauf der Ist-Position eines Läufers bzw. eines Verdichterkolbens, des Ist-Spulenstroms bzw. des Soll-Spulenstroms im eingeschwungenen Zustand gezeigt ist;

Fig. 6 eine Graphik, in welcher ein simulierter zeitlicher Verlauf der Ist-Position eines Läufers bzw. eines Verdichterkolbens, des geregelten und des nicht geregeltem (d.h. gesteuerten) Spulenstrom während des Einschwingvorgangs gezeigt ist;

Fig. 7 einen Graph, der den zeitlichen Verlauf der Ist-Position nach Fig. 6 am oberen Umkehrpunkt während des Einschwingvorgangs detaillierter darstellt;

Fig. 8 einen Graph, der den zeitlichen Verlauf der Ist-Position nach Fig. 6 am unteren Umkehrpunkt während des Einschwingvorgangs detaillierter darstellt; und

Fig. 9 einen Graph, der den zeitlichen Verlauf während des Einschwingvorgangs zeitlich hoch aufgelöst darstellt.

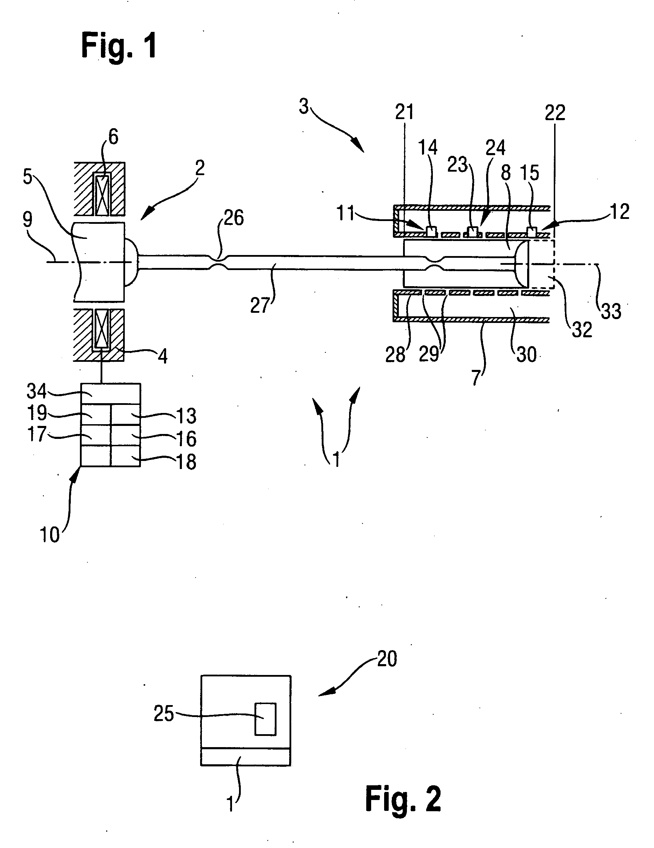

Fig. 1 zeigt eine erfindungsgemäße Vorrichtung 1 in einer Schnittansicht mit einem Linearantrieb 2, welcher einen Linearverdichter 3 zur Verdichtung eines gasförmigen Fluids 32 antreibt. Das Fluid 32 kann ein Kältemittel sein, dass einer Verflüssigungsstufe (nicht dargestellt) zugeführt wird. Der Linearantrieb 2 umfasst einen Stator 4, in dem ein Läufer 5 entlang einer Antriebsachse 9 hin und her beweglich ist. Der Läufer 5 weist Magnete (nicht gezeigt) auf, die mit Hilfe einer Antriebsspule 6 bewegt werden.

Der Linearantrieb 2 ist über eine Kolbenstange 27 mit einem Verdichterkolben 8 verbunden, der entlang einer Kolbenachse 33 in einem Kolbengehäuse 7 hin und her beweglich ist. Die Kolbenstange 27 weist zwei als Engstellen ausgebildete Kupplungen 26, die dazu dienen, ein Verkanten des Verdichterkolbens 8 zu verhindern. Die Kupplungen 26 können quer zur Kolbenstange 27 wirkende Verbiegungen aufnehmen.

Der Verdichterkolben 8 wird mit Hilfe einer Öffnungen 29 aufweisenden Gehäusewand 28 seitlich, d. h. in einer Richtung quer zur Kolbenachse 33 gelagert, indem ein mit Hilfe einer Zuführung 30 bereitgestelltes Fluid durch die Öffnungen 29 gedrückt wird. Durch das aus den Öffnungen 29 ausströmende Fluid wird ein Gaspolster vor der Gehäusewand 28 gebildet, welches den Verdichterkolben 8 vor der Gehäusewand 28 auf Abstand hält und berührungslos lagert. Insgesamt wird hierdurch ein Gasdrucklager gebildet.

Die Ist-Position des Verdichterkolbens 8 bzw. die Zeitpunkte, an denen sich der Verdichterkolben 8 an einer ersten Stelle 11 bzw. an einer zweiten Stelle vorbeibewegt, wird mit Hilfe eines Erfassungsmittels 14 zum Erfassen eines ersten und eines zweiten Zeitpunktes und ein Erfassungsmittel 15 zum Erfassen eines dritten und vierten Zeitpunktes ermittelt, wobei der erste und der dritte Zeitpunkt die Zeitpunkte sind, zu denen sich der Verdichterkolben 8 bei seiner Hinbewegung an der jeweiligen Stelle 11, 12 vorbei bewegt, und der zweite und der vierte Zeitpunkt jene Zeitpunkte sind, an denen sich der Verdichterkolben 4 bei seiner Herbewegung an den jeweiligen Stellen 11, 12 vorbeibewegt. Ein weiteres Erfassungsmittel 23 dient dazu, den Zeitpunkt zu ermitteln, an dem sich der Verdichterkolben 4 an einer weiteren Stelle 24 vorbeibewegt.

Der Verdichterkolben 8 bewegt sich oszillierend zwischen einem ersten Umkehrpunkt 21 und einem zweiten Umkehrpunkt 22 hin und her. Die Umkehrpunkte liegen bei +10 mm und bei -10 mm. Die Erfassungsmittel 14, 15 sind bei +7 mm bzw. bei -7 mm, d.h. jeweils 3 mm vor dem jeweiligen Umkehrpunkt 21,22 angeordnet. Die Antriebsspule 6 wird von einem Mittel 10 zum Regeln des Spulenstroms mit Hilfe einer H-Brücke 19 geregelt, wobei mit Hilfe eines Mittels 13 zum Vorhersagen eines zukünftigen Ist-Spulenstroms der momentane Soll-Spulenstrom unter Berücksichtigung der Vorhersage geregelt wird. Mit Hilfe eines Mittels 34 zum Bestimmen eines Soll-Spulenstroms wird ein Soll-Spulenstrom in Abhängigkeit einer momentanen und/oder für die Zukunft erwarteten Ist-Position des Läufers 5 bzw. des Verdichterkolbens 8 bestimmt. Mit Hilfe des Mittels 13 zum Vorhersagen eines zukünftigen Ist-Spulenstroms wird die momentane und/oder zukünftige Ist-Position des Läufers 5 bzw. des Verdichterkolbens 8 in Abhängigkeit der letzten 5 Schwingungsperioden bestimmt. Mit Hilfe eines Berechnungsmittels 16 zum Berechnen einer momentanen und/oder zukünftigen Position des Läufers 5 und/oder des Verdichterkolbens 8 wird die momentane und/oder zukünftige Position des Läufers 5 und/oder des Verdichterkolbens mittels Interpolation bzw. Extrapolation aus den momentanen und/oder vergangenen Zeitpunkten ermittelt. Ein Vergleichsmittel 17 vergleicht berechnete Ist-Positionen mit einer vorgegebenen (Soll-)Bewegungskurve. Die vorgegebene Bewegungskurve gibt insbesondere die maximalen Umkehrpunkte 21, 22 des Läufers 5 bzw. des Verdichterkolbens 8 vor, um ein Anschlagen des Verdichterkolbens 8 an einer Ventilplatte (nicht dargestellt) zu vermeiden. Ein Steuermittel 18 steuert den Läufer 5 und/oder den Verdichterkolben 8 entsprechend dem Vergleichsergebnis an.

Fig. 2 zeigt ein Kühlgerät 20 unter Verwendung der erfindungsgemäßen Vorrichtung 2 zur Kühlung von Waren 25. Durch die hierdurch mögliche hohe Präzision bei der Regelung der Hin- und Herbewegung des Läufers 5 bzw. des Verdichterkolbens 8 kann ein Totvolumen in einem Linearverdichter 3 erheblich reduziert werden, wodurch der Wirkungsgrad des Kühlgeräts 20 erheblich gesteigert werden kann. Folglich können Waren 25 effizient, energiesparsam, zuverlässig und zügig gekühlt werden.

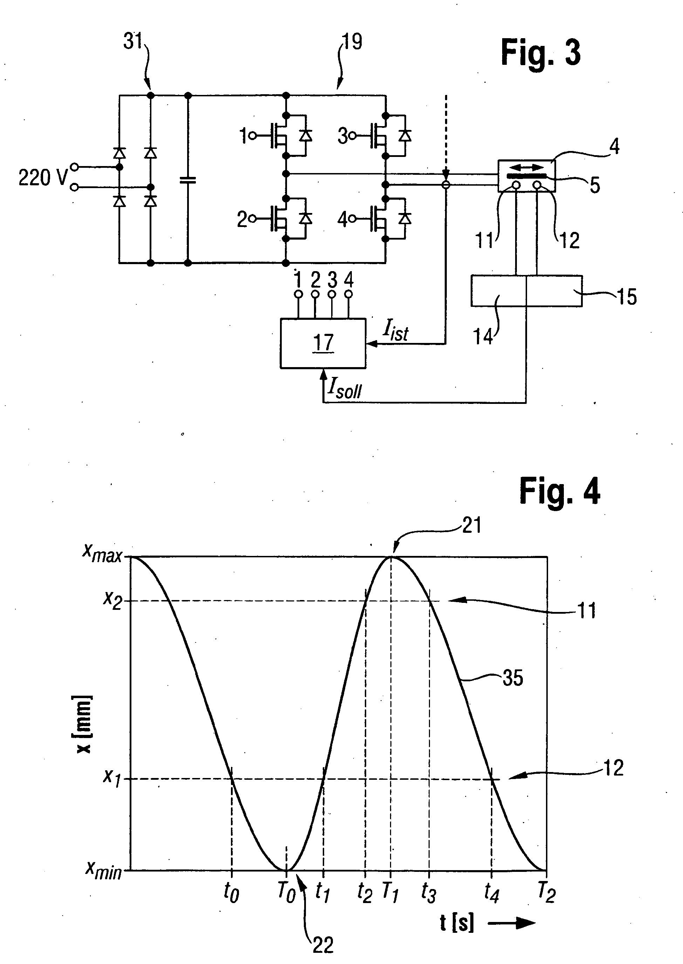

Fig. 3 zeigt eine Schaltskizze einer erfindungsgemäßen Vorrichtung 1 mit einem Gleichrichter 21, einer H-Brücke 19, dem Vergleichsmittel 17, dem Erfassungsmittel 14 zum Erfassen des ersten und zweiten Zeitpunktes, dem Erfassungsmittel 15 zum Erfassen des dritten und vierten Zeitpunktes, an denen sich der Läufer 5 im Stator 4 an einer ersten Stelle 11 und an einer zweiten Stelle 12 seiner Hin- und Herbewegung vorbeibewegt.

Fig. 4 zeigt eineinhalb Schwingungsperioden einer Ist-Position 35 eines Verdichterkolbens 8 bei der Hin- und Herbewegung und zeigt die im Folgenden verwendeten Variablen. Die eigentliche Ankerschwingung wird messtechnisch erfasst, dieses Messergebnis wird einem Positionsregler zugeführt, der Positionsregler generiert ein Soll-Stromsignal (Soll-Strom durch die Erregerspule des Linearantriebes - in der Abbildung mit $I_{soll}$ gekennzeichnet), welches mittels eines (PWM-gesteuerten) Stromreglers in Verbindung mit einer H-Brücke (Konverterschaltung) als Stellglied realisiert wird (d. h. Ist-Strom $I_{ist}$ und Soll-Strom $I_{soll}$ stimmen näherungsweise überein). Die Ankerpositionsmessstellen sind mit $x_1$ und $x_2$ bezeichnet, die Messzeitpunkte mit $t_0$ bis $t_4$, die Ankerpositionswerte im unteren und oberen Umkehrpunkt mit $x_{min}$ und $x_{max}$. der Anker erreicht die unteren bzw. oberen Umkehrpunkte zu den Zeiten $T_0$ bis $T_2$.

Innerhalb des Regelungsalgorithmus soll die Ankerposition als Funktion der Zeit, $x(t)$, näherungsweise für die Kompressions- und Expansionshalbwelle jeweils durch eine Kosinus-Halbwelle beschrieben werden.

Kompressionshalbwelle:

$$x(t) = -\frac{(x_{max} - x_{min})}{2} \cos\left(\frac{\pi}{(T_1 - T_0)}(t - T_0)\right) + \frac{(x_{max} + x_{min})}{2} \quad \text{für} \quad T_0 \leq t \leq T_1 . \qquad \text{Eq 1}$$

Expansionshalbwelle:

$$x(t) = \frac{(x_{max} - x_{min})}{2} \cdot \cos\left(\frac{\pi}{(T_2 - T_1)}(t - T_1)\right) + \frac{(x_{max} + x_{min})}{2} \quad \text{für} \quad T_1 \leq t \leq T_2 \qquad \text{Eq. 2}$$

Unter Zugrundelegung des Verhältnisses $(t_1 - T_0)/(T_0 - t_0) = (t_2 - t_1)/(t_4 - t_3)$ erhält man für die Lagen der Umkehrpunkte

$$x_{min} = \frac{x_1 - x_2 + x_1 \cdot \cos\left(\frac{\pi \cdot (t_3 - t_2)}{t_4 - t_0}\right) - x_2 \cdot \cos\left(\frac{\pi \cdot (t_4 - t_1)}{t_4 - t_0}\right)}{\cos\left(\frac{\pi \cdot (t_3 - t_2)}{t_4 - t_0}\right) - \cos\left(\frac{\pi \cdot (t_4 - t_1)}{t_4 - t_0}\right)} ; \qquad \text{Eq 11}$$

$$x_{max} = \frac{x_2 - x_1 + x_1 \cdot \cos\left(\frac{\pi \cdot (t_3 - t_2)}{t_4 - t_0}\right) - x_2 \cdot \cos\left(\frac{\pi \cdot (t_4 - t_1)}{t_4 - t_0}\right)}{\cos\left(\frac{\pi \cdot (t_3 - t_2)}{t_4 - t_0}\right) - \cos\left(\frac{\pi \cdot (t_4 - t_1)}{t_4 - t_0}\right)} \qquad \text{Eq. 12}$$

Als Messpositionen wurden $x_1$=-7,0 mm und $x_2$=+7,0 mm gewählt. Die Soll-Werte für die maximale Ankerposition $x_{max}$ (=oberer Umkehrpunkt) und die minimale Ankerposition $x_{min}$ (=unterer Umkehrpunkt) wurden mit $L_{max}$=+9,8 mm und $L_{min}$=-9,7 mm vorgegeben.

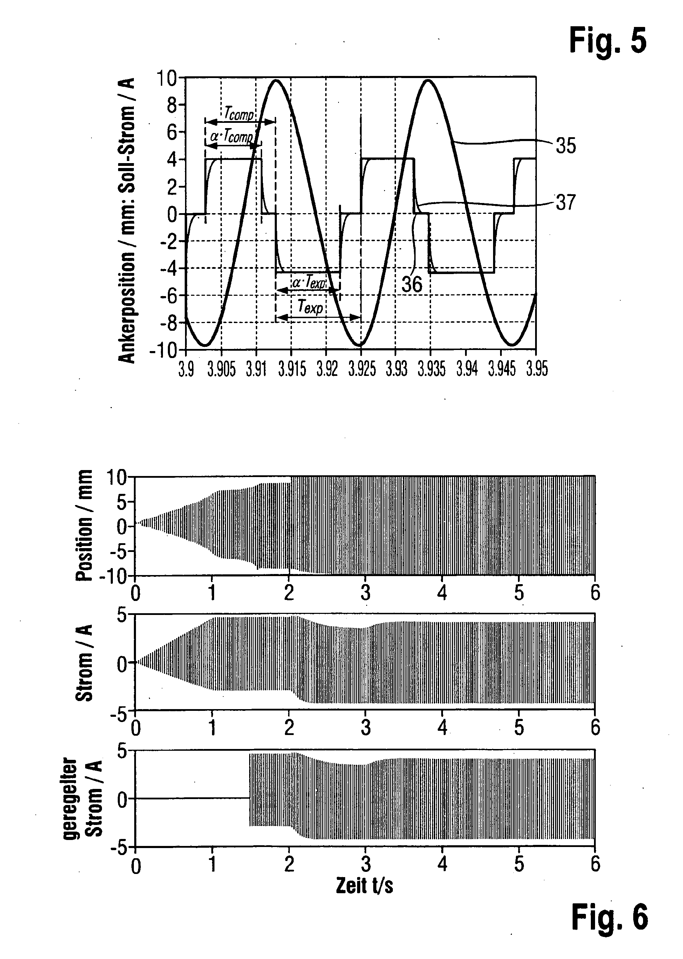

In Fig. 5 ist die simulierte Ist-Position 35, d.h. die Ankerposition, der Soll-Spulenstrom 36 und der "idealisierte" Ist-Spulenstrom 37 als Funktion der Zeit aufgetragen. Der Ist-Spulenstrom wird "idealisiert" bezeichnet, weil die höherfrequenten Schwankungen des Ist-Spulenstromes aufgrund der im realen Stromregler verwendeten Pulsweitenmodulation in der Abbildung enthalten sind. Simuliert bzw. berechnet wurde der (idealisierte) Ist-Spulenstrom 37 aus dem Soll-Spulenstrom 36, indem angenommen wurde, dass der Stromregler ein einfacher PI-Regler ist. Im realen Experiment wurde beobachtet, dass bei geregelter Ankerschwingung der obere Umkehrpunkt um so weniger schwankte, je größer das Tastverhältnis a (*duty cycle*) gewählt wurde. Das Tastverhältnis muss aber kleiner als 1 sein, denn es ist zu berücksichtigen, dass der Ist-Spulenstrom 37 dem Soll-Spulenstrom 36 bei einem Soll-Strom-Sprung nicht perfekt folgt, sondern eine gewisse Zeit zum ein- bzw. Ausschwingen benötigt. Diese Ein- bzw. Ausschwingzeit hängt von der Größe des Soll-Strom-Sprunges, der (gleichgerichteten) Betriebsspannung der H-Brücke, von Induktivität und Ohmschem Widerstand der Antriebsspule sowie von den Stromreglerparametern ab. Ein (zeitliches) Tastverhältnis a von 80 %, wie es in Fig. 5 verwendet wurde, hat sich als besonders vorteilhaft erwiesen, dass der beschriebenen Forderung "lang" aber nicht zu lang" im Regelfall genügt.

Fig. 6 zeigt einen simulierten Einschwingvorgang. Dabei ist im obersten Diagramm die Ankerposition über der Zeit aufgetragen und darunter der Spulenstrom über der Zeit sowie der sog. geregelte Spulenstrom. (hier wird zwischen geregeltem Spulenstrom und nicht geregeltem, d. h. gesteuertem, Spulenstrom unterschieden, was nachstehend näher erläutert wird).

Während der ersten 2 Sekunden wird der Strom nicht geregelt, sondern gesteuert. Dabei wird während der ersten Sekunde die Amplitude des rechtförmige Soll-Stromsignal linear über der Zeit erhöht, bis ein positiver Stromamplitudenwert von +4,5 A und ein negativer Stromamplitudenwert von -3,0 A erreicht ist. Mit dem steigenden Spulenstrom steigt die Amplitude der Ankerschwingung.

Für 1,0 s < $t$ < 2,0 s bleibt die (gesteuerte) Stromamplitude konstant. Dabei erhöht sich die Amplitude der Ankerschwingung weiter (wenn auch nicht mehr so stark wie vorher) bis ca. $t$ = 1,6 s. Bei ca. $t$ = 1,4 s ist die Ankerschwingungsamplitude so groß, dass beide Messpositionen $x_1$ und $x_2$ vom Anker überfahren werden.

Für $t$ > 1,6 s ist die Ankerschwingung im gesteuerten Betrieb im stationären Zustand, und beide Messpositionen $x_1$ und $x_2$ werden vom Anker überfahren. Somit sind die Voraussetzungen für das Umschalten auf einen geregelten Betrieb gegeben. Bei $t$ = 2,0 s wird auf geregelten Betrieb umgeschaltet. Dabei werden die positiven und negativen Stromamplitudenwerte (von +4,5 A und -3,0 A) zunächst vom gesteuerten Betrieb übernommen. Es erfolgt lediglich eine "Phasenanpassung" des Stromsignals an die Ankerschwingung, so dass das Stromsignal immer in Richtung der Ankerbewegung wirkt, d. h. nicht elektrisch gebremst wird. Dieses kann zur Folge haben, dass sich die Ankerschwingungsamplitude nach dem Umschalten von gesteuertem auf geregelten Betrieb sehr schnell erhöht. In Fig. 6 ist dies hauptsächlich in der Nähe des oberen Umkehrpunktes der Fall. Um ein Anschlagen des Kolbens an der Ventilplatte zu vermeiden, wird für 2,0 s < $t$ < 3,0 s der Sollwert für $x_{max}$ nicht sofort auf den Endwert von $L_{max}$ = + 9,8 mm, sondern auf + 9,5 mm gesetzt. Für den Sollwert von $x_{min}$ gilt hingehen sofort ab Zuschaltung der Regelung (bei $t$ = 2,0 s) der Wert von $L_{min}$ = - 9,7 mm. Ab $t$ = 3,0 s wird der Sollwert für $x_{max}$ auf den Endwert von $L_{max}$ = + 9,8 mm gesetzt. Ein eingeschwungener geregelter Betrieb ist ca. ab $t$ = 4,0 s erreicht.

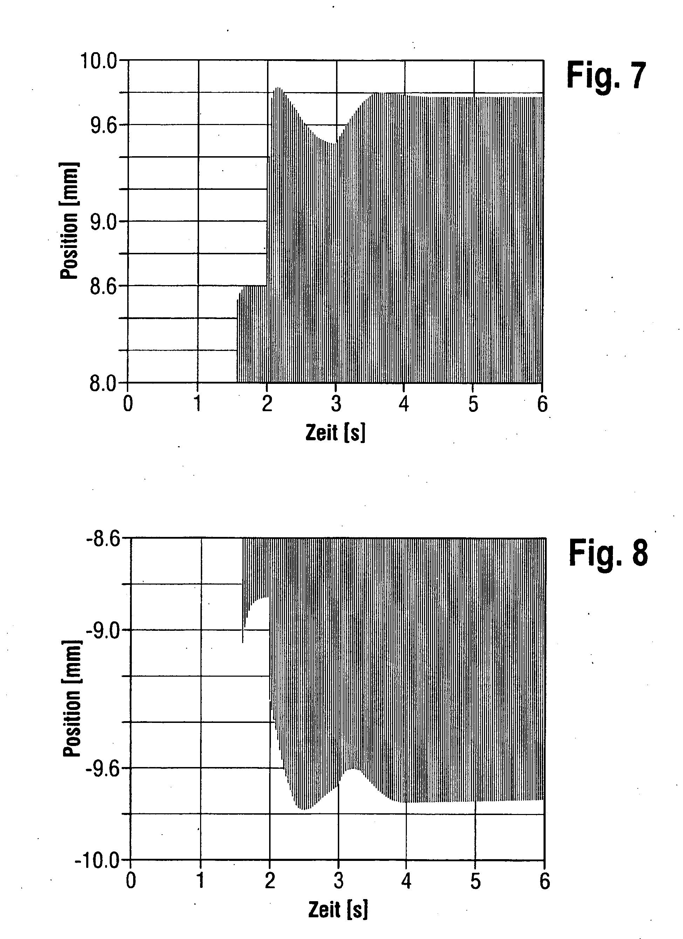

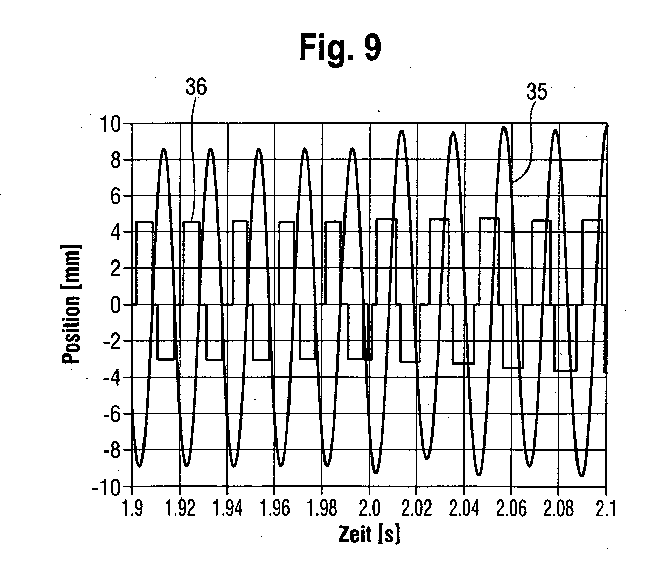

In den Figuren 7 und 8 sind die zeitlichen Verläufe der Ist-Position am oberen und unteren Umkehrpunkt während des Einschwingvorgangs dargestellt. Figur 9 zeigt den zeitlichen Verlauf zeitlich hoch aufgelöst.

Wie zu aus den Figuren 7 bis 9 zu erkennen ist, werden im eingeschwungenen Zustand (für $t$ > 4,0 s) die Soll-Werte von $L_{max}$ = + 9,8 mm und $L_{min}$ = - 9,7 mm leicht verfehlt. Dies liegt daran, dass die Approximation mittels zweier Kosinus-Funktionen nicht ideal ist und deshalb die mittels Eq. 11 und Eq. 12 berechneten Umkehrpunkte von den tatsächlichen abweichen. Man kann diese Abweichungen, die durch die Wahl der Approximationsfunktionen verursacht werden, aber beliebig klein machen, indem man Approximationsfunktionen mit mehr "Tuning-Parametern" bzw. Fitparametern verwendet.

Der Umschaltvorgang von gesteuerten auf geregelten Betrieb bei $t = 2$, s ist in Fig. 9 mit hoher Zeitauflösung dargestellt. Die Ist-Position 35, d.h. der simulierte tatsächliche Ankerhub, ist sinusförmig und der Soll-Strom 36 ist rechteckförmig. Beim Umschalten bei $t = 2{,}0$ s wird - bei zunächst gleich bleibender positiver und negativer Amplitude des rechteckförmigen Soll-Stromsignals - das Soll-Stromsignal mit der Ankerschwingung "in Phase" gebracht, d. h. die vom Strom ausgehende elektromagnetische Kraft auf den Anker wirkt ab dem Umschaltzeitpunkt immer in Richtung der (natürlichen) Ankerbewegung. Dies ist wie in der Figur erkennbar im gesteuerten Betrieb davor nicht der Fall. Anschließend werden die beiden Soll-Strom-Amplitudenwerte (mittels zweier I-Regler) allmählich so abgeändert, dass sich der obere und der untere Umkehrpunkt der Ankerschwingung ihren jeweiligen Sollwerten annähern.

Die Erfindung betrifft ein Verfahren zum Regeln eines Linearantriebs 2, der einen Stator 4, einen darin entlang einer Antriebsachse 9 hin und her beweglichen Läufer 5 und eine von einem Spulenstrom durchflossene Antriebsspule 6 aufweist, insbesondere für einen Linearverdichter 3, der ein Kolbengehäuse 7 und eine darin entlang einer Kolbenachse 33 hin und her beweglichen, von dem Linearverdichter 2 angetriebenen Verdichterkolben 8 aufweist, wobei der Spulenstrom geregelt wird, und zwar derart dass der Ist-Spulenstrom und der Soll-Spulenstrom im Wesentlichen gleich sind; sowie eine für die Durchführung des erfindungsgemäßen Verfahrens geeignete Vorrichtung (1) und ein Verfahren zum Kühlen von Waren 25 und/oder zum Verdichten eines Fluids 32, welches die erfindungsgemäße Vorrichtung 1 oder das erfindungsgemäße Regelungsverfahren verwendet. Die Erfindung zeichnet sich dadurch aus, dass die Regelung der Hin- und Herbewegung des Läufers 5 bzw. des Verdichterkolbens 8 mit einfachen Mitteln effizient und präzise kontrolliert werden kann, ohne dass eine aufwendige Sensorik erforderlich ist.

**Bezugszeichenliste**

1 Vorrichtung

2 Linearantrieb

3 Linearverdichter

4 Stator

5 Läufer

6 Spule

7 Kolbengehäuse

8 Verdichterkolben

9 Antriebsachse

10 Mittel zum Regeln des Spulenstroms

11 erste Stelle

12 zweite Stelle

13 Mittel zum Vorhersagen eines zukünftigen Spulenstroms.

14 Erfassungsmittel zum Erfassen eines ersten und zweiten Zeitpunktes

15 Erfassungsmittel zum Erfassen eines dritten und vierten Zeitpunktes

16 Berechnungsmittel

17    Vergleichsmittel

18    Steuermittel

19    H-Brücke

20    Kühlgerät

21    erster Umkehrpunkt

22    zweiter Umkehrpunkt

23    weiteres Erfassungsmittel

24    weitere Stelle

25    Waren

26    Kupplung

27    Kolbenstange

28    Gehäusewand

29    Öffnungen

30    Zuführung

31    Gleichrichter

32    Fluid

33    Kolbenachse

34    Mittel zum Bestimmen eines Soll-Spulenstroms

35    Simulierte Ist-Position

36    Soll-Spulenstrom

37    Ist-Spulenstrom

**Patentansprüche**

1. Verfahren zum prädiktiven Regeln eines Linearantriebs (2), der einen Stator (4), einen darin entlang einer Antriebsachse (9) hin und her beweglichen Läufer (5) und eine von einem Spulenstrom durchflossene Antriebsspule (6), aufweist, insbesondere für einen Linearverdichter (3), der ein Kolbengehäuse (7) und einen darin entlang einer Kolbenachse (33) von dem Linearantrieb (2) angetriebenen, hin und her beweglichen Verdichterkolben (8) aufweist, **dadurch gekennzeichnet, dass** der Spulenstrom geregelt wird und zwar derart, dass der Ist-Spulenstrom und der Soll-Spulenstrom im Wesentlichen gleich sind, wobei während eines Einschwingvorgangs die Stromamplitude des Spulenstroms gesteuert wird,

2. Verfahren nach Anspruch 1, **dadurch gekennzeichnet, dass** ein Soll-Spulenstrom in Abhängigkeit einer momentanen und/oder zukünftigen Ist-Position des Läufers (5) bzw. des Verdichterkolbens (8) bestimmt wird.

3. Verfahren nach Anspruch 2, **dadurch gekennzeichnet, dass** die momentane und/oder zukünftige Ist-Position des Läufers (5) bzw. des Verdichterkolbens (8) in Abhängigkeit der letzten 2 bis 20, insbesondere 4 bis 10, Schwingungsperioden bestimmt wird.

4. Verfahren nach Anspruch 3, **dadurch gekennzeichnet, dass** die zukünftige Ist-Position unter Berücksichtigung eines Trends der Hin- und Herbewegung über die letzten 2 bis 20, insbesondere 4 bis 10, Schwingungsperioden antizipiert wird.

5. Verfahren nach einem der vorherigen Ansprüche, **dadurch gekennzeichnet, dass** ein potentieller zukünftiger Ist-Spulenstrom antizipiert wird und der momentane Soll-Spulenstrom unter Berücksichtigung der Vorhersage geregelt wird.

6. Verfahren nach einem der vorherigen Ansprüche, **gekennzeichnet durch** folgende Schritte:

   - Erfassen eines ersten Zeitpunktes, zu dem sich der Läufer (5) und/oder der Verdichterkolben (8) an einer ersten Stelle (11) bei seiner Hinbewegung vorbeibewegt,
   - Erfassen eines zweiten Zeitpunktes, zu dem sich der Läufer (5) und/oder der Verdichterkolben (8) an der ersten Stelle (11) bei seiner Herbewegung vorbeibewegt,
   - Erfassen eines dritten Zeitpunktes, zu dem sich der Läufer (5) und/oder der Verdichterkolben (8) an einer entlang der Achse (9, 33) zur ersten Stelle (11) versetzten zweiten Stelle (12) bei seiner Hinbewegung vorbeibewegt,
   - Erfassen eines vierten Zeitpunktes, zu dem sich der Läufer (5) und/oder der Verdichterkolben (8) an der entlang der Achse (9, 33) zur ersten Stelle (11) versetzten zweiten Stelle (12) bei seiner Hinbewegung vorbeibewegt,
   - Berechnen einer momentanen und/oder zukünftigen Ist-Position des Läufers (5) und/oder des Verdichterkolbens (8) mittels Interpolation bzw. Extrapolation aus den Zeitpunkten,
   - Vergleich der berechneten Ist-Position mit einer vorgegebenen Soll-Bewegungskurve, und
   - Ansteuern des Läufers (5) und/oder des Verdichterkolfoens (8) entsprechend dem Vergleichsergebnis.

7. Verfahren nach Anspruch 6, **dadurch gekennzeichnet, dass** die Interpolation und/oder Extrapolation mit Hilfe von Approximationsfunktionen, insbesondere Kreisfunktionen wie Kosinus- oder Sinusfunktionen, Polynomen oder Splines, erfolgt.

8. Verfahren nach Anspruch 7, **dadurch gekennzeichnet, dass** die Berechnung mit Hilfe einer ersten Approximationsfunktion, insbesondere einer ersten Kreisfunktion mit einer ersten Phase, Frequenz und/oder Amplitude, für die Hinbewegung des Läufers (5) bzw. des Verdichterkolbens (8) und einer zweiten Approximationsfunktion, insbesondere einer zweiten Kreisfunktion mit einer zweiten Phase, Frequenz und/oder Amplitude, für die Herbewegung des Läufers (5) bzw. des Verdichterkolbens (8) erfolgt.

9. Verfahren nach einem der vorherigen Ansprüche 6 bis 8, **dadurch gekennzeichnet, dass** weitere Zeitpunkte erfasst werden, zu denen sich der Läufer (5) und/oder der Verdichterkolben (8) an weiteren Stellen (24) vorbeibewegt, und bei der Regelung berücksichtigt werden.

10. Verfahren nach einem der vorherigen Ansprüche, **dadurch gekennzeichnet, dass** der Spulenstrom mit Hilfe einer H-Brücke (19) geschaltet wird.

11. Verfahren nach einem der vorherigen Ansprüche, **dadurch gekennzeichnet, dass** die Antriebsspule (6) mit einem Rechtecksignal angesteuert wird, wobei insbesondere das zeitliche Tastverhältnis in einem Bereich von 73 % bis 87 %, insbesondere in einem Bereich von 78 % bis 82 %, liegt.

12. Verfahren nach einem der vorherigen Ansprüche, **dadurch gekennzeichnet, dass** während des Einschwingvorgangs die Stromamplitude des Spulenstroms derart gesteuert wird, dass sie monoton, vorzugsweise linear, gesteigert wird, wobei insbesondere ein gesteuerter Betrieb in einen geregelten Betrieb übergeht, sobald die Stromamplitude und/oder die Schwingungsamplitude der Hin- und Herbewegung des Läufers (5) und/oder des Verdichterkolbens (8) einen vorgegebenen Wert überschreitet, wobei insbesondere zunächst auf einen ersten Umkehrpunkt und anschliessend auf einen zweiten Umkehrpunkt der Hin- und Herbewegung eingeregelt wird.

13. Vorrichtung (1) umfassend einen Linearantrieb (2), der einen Stator (4), einen darin entlang einer Antriebsachse (9) hin und her beweglichen Läufer,(5) eine von einem Spulenstrom durchflossene Antriebsspule (6) und ein Mittel (10) zum Prädiktiven Regeln eines Spulenstroms aufweist, insbesondere für einen Linearverdichter (3), der den Linearantrieb (2), ein Kolbengehäuse (7) und einen darin entlang einer Kolbenachse (33) von dem Linearantrieb (2) antreibbaren, hin und her beweglichen Verdichterkolben (8) aufweist, **dadurch gekennzeichnet, dass** mit dem Mittel (10) zum prädiktiven Regeln des Spulenstroms der Spulenstrom regelbar ist, und zwar derart, dass der Ist-Spulenstrom und der Soll-Spulenstrom im Wesentlichen gleich sind, wobei während eines Einschwingvorgangs die Stromamplitude des Spulenstroms gesteuert wird,

14. Vorrichtung (1) nach Anspruch 13, **dadurch gekennzeichnet, dass** das Mittel (10) zum Regeln des Spulenstroms mindestens eines der folgenden Merkmale (β1) bis (β4) aufweist:

(β1) es ist ein Mittel (13) zum Vorhersagen eines zukünftigen Ist-Spulenstroms vorgesehen und der momentane Soll-Spulenstrom ist unter Berücksichtigung der Vorhersage regelbar;
(β2) es ist ein Mittel (34) zum Bestimmen eines Soll-Spulenstroms vorgesehen und ein Soll-Spulenstrom ist in Abhängigkeit einer momentanen und/oder zukünftigen Ist-Position des Läufers (5) bzw. des Verdichterkolbens (8) bestimmbar;
(β3) ein Mittel (13) zum Vorhersagen eines zukünftigen Ist-Spulenstroms ist vorgesehen, mit dem die momentane und/oder zukünftige Ist-Position des Läufers (5) bzw. des Verdichterkolbens (8) in Abhängigkeit der letzten 2 bis 20, insbesondere 4 bis 10, Schwingungsperioden bestimmbar ist;
(β4) ein Mittel (13) zum Vorhersagen eines zukünftigen Ist-Spulenstroms ist vorgesehen, mit dem die zukünftige Ist-Position unter Berücksichtigung eines Trends der Hin- und Herbewegung des Läufers (5) und/oder des Verdichterkolbens (8) über die letzten 2 bis 20, insbesondere 4 bis 10, Schwingungsperioden antizipierbar ist.

15. Vorrichtung (1) nach Anspruch 13 oder 14, weiterhin umfassend

- ein erstes Erfassungsmittel (14) zum Erfassen eines ersten Zeitpunktes, zu dem sich der Läufer (5) und/oder der Verdichterkolben (8) an einer ersten Stelle (11) bei seiner Hinbewegung vorbeibewegt, und zum Erfassen eines zweiten Zeitpunktes, zu dem sich der Läufer (5) und/oder der Verdichterkolben (8) an der ersten Stelle (11) bei seiner Herbewegung vorbeibewegt,
- ein zweites Erfassungsmittel (15) zum Erfassen eines dritten Zeitpunktes, zu dem sich der Läufer (5) und/oder der Verdichterkolben (8) an einer entlang der Achse (9, 33) zur ersten Stelle (11) versetzten zweiten Stelle (12) bei seiner Hinbewegung vorbeibewegt, und zum Erfassen eines vierten Zeitpunktes, zu dem sich der Läufer (5) und/oder der Verdichterkolben (8) an der entlang der Achse (9, 33) zur ersten Stelle (11) versetzten zweiten Stelle (12) bei seiner Hinbewegung vorbeibewegt,
- ein Berechnungsmittel (16) zum Berechnen einer momentanen und/oder zukünftigen Position des Läufers (5) und/oder des Verdichterkolbens (8) mittels Interpolation bzw. Extrapolation aus den momentanen und/oder vergangenen Zeitpunkten,
- ein Vergleichsmittel (17) zum Vergleichen der berechneten Position mit einer vorgegebenen Bewegungskurve, und
- ein Steuermittel (18) zum Ansteuern des Läufers (5) und/oder des Verdichterkolbens (8) entsprechend dem Vergleichsergebnis.

16. Vorrichtung (1) nach Anspruch 15, **gekennzeichnet durch** weitere Erfassungsmittel (23) zum Erfassen weiterer Zeitpunkte, zu denen sich der Läufer (5) und/oder der Verdichterkolben (8) an einer weiteren Stelle (24) bei einer Hin- bzw. Herbewegung vorbeibewegt.

17. Vorrichtung (1) nach einem der vorherigen Ansprüche 13 bis 16, **dadurch gekennzeichnet, dass** eine H-Brücke (19) zum Schalten des Spulenstroms vorgesehen ist.

18. Vorrichtung (1) nach einem der vorherigen Ansprüche 13 bis 17, **dadurch gekennzeichnet, dass** die Regelung ein zeitliches Tastverhältnis in einem Bereich von 73 % bis 87 %, insbesondere in einem Bereich von 78 % bis 82 %, vorsieht.

19. Vorrichtung (1) nach einem der vorherigen Ansprüche 13 bis 18, **dadurch gekennzeichnet, dass** die erste (11) und/oder die zweite (12) Stelle in der Nähe der Umkehrpunkte (21, 22) der Hin- und Herbewegung liegt, insbesondere in einem Bereich von 73 % bis 87 %, vorzugsweise in einem Bereich von 78 % bis 82 %, der Amplitude der Hin- und Herbewegung liegt.

20. Vorrichtung (1) nach einem der vorherigen Ansprüche 13 bis 19, **dadurch gekennzeichnet, dass** das Berechnungsmittel ein Mittelungsmittel aufweist, wodurch eine zukünftige Ist-Position in Abhängigkeit der letzten 2 bis 20, insbesondere 4 bis 10, Schwingungsperioden bestimmbar ist.

21. Vorrichtung (1) nach einem der vorherigen Ansprüche 13 bis 20, **dadurch gekennzeichnet, dass** sie ein Kühlgerät (20), insbesondere ein Kühl- und/oder Gefrierschrank oder eine Klimaanlage, ist.

22. Vorrichtung (1) nach einem der vorherigen Ansprüche 13 bis 21, **dadurch gekennzeichnet, dass** mindestens eines der Erfassungsmittel (14, 15) zum Erfassen der Zeitpunkte, zu dem sich der Läufer (5) und/oder der Verdichterkolben (8) an einer Stelle (11, 12) bei seiner Hinbewegung vorbeibewegt, an einer Stelle zwischen 20 % und 10 %, insbesondere zwischen 17 % und 12 %, des Abstands zwischen den Umkehrpunkten (21, 22) vor einem Umkehrpunkt (21, 22) angeordnet ist.

23. Verfahren zum Kühlen einer Ware (25) und/oder zum Verdichten eines Fluids (32), **dadurch gekennzeichnet, dass** sie eine Vorrichtung (1) nach einem der Ansprüche 13 bis 21 verwendet und/oder ein Regelungsverfahren nach einem der Ansprüche 1 bis 12 anwendet.

## Claims

1. Method for predictive regulation of a linear drive (2), which comprises a stator (4), a rotor (5) reciprocatingly movable therein along a drive axis (9) and a drive coil (6) conducting a coil current, particularly for a linear compressor (3), which comprises a piston housing (7) and a compressor piston (8) driven by a linear drive (2) to be reciprocatingly movable along a piston axis (33), **characterised in that** the coil current is regulated and, in particular, in such a manner that the actual coil current and the target coil current are substantially the same, wherein the current amplitude of the coil current is controlled during a transient.

2. Method according to claim 1, **characterised in that** a target coil current is determined in dependence on an instantaneous and/or future actual position of the rotor (5) or of the compressor piston (8).

3. Method according to claim 2, **characterised in that** the instantaneous and/or future actual position of the rotor (5) or of the compressor piston (8) is determined in dependence on the last 2 to 20, particularly 4 to 10, oscillation periods.

4. Method according to claim 3, **characterised in that** the future actual position is anticipated with consideration of a trend of the reciprocating movement over the last 2 to 20, particularly 4 to 10, oscillation periods.

5. Method according to any one of the preceding claims, **characterised in that** a potential future actual coil current is anticipated and the instantaneous target coil current is regulated with consideration of the prediction.

6. Method according to any one of the preceding claims, **characterised by** the following steps:

   - detecting a first time instant at which the rotor (5) and/or the compressor piston (8) moves or move past a first point (11) during the forward movement thereof,
   - detecting a second time instant at which the rotor (5) and/or the compressor piston (8) moves or move past the first point (11) during the return movement thereof,
   - detecting a third time instant at which the rotor (5) and/or the compressor piston (8) moves or move past a second point (12), which is offset with respect to the first point (11) along the axis (9, 33), during the forward movement thereof,
   - detecting a fourth time instant at which the rotor (5) and/or the compressor piston (8) moves or move past a second point (12), which is offset with respect to the first point (11) along the axis (9, 33), during the return movement thereof,
   - calculating an instantaneous and/or future actual position of the rotor (5) and/or of the compressor piston (8) by means of interpolation or extrapolation from the time instants,
   - comparing the calculated actual position with a predetermined target movement plot and
   - controlling the drive of the rotor (5) and/or the compressor piston (8) in correspondence with the comparison result.

7. Method according to claim 6, **characterised in** the interpolation and/or extrapolation is or are carried with the help of approximation functions, particularly circular functions such as cosine or sine functions, polynomials or splines.

8. Method according to claim 7, **characterised in that** the calculation is carried out with the help of a first approximation function, particularly a first circular function with a first phase, frequency and/or amplitude, for the forward movement of the rotor (5) or of the compressor piston (8) and a second approximation function, particularly a second circular function with a second phase, frequency and/or amplitude, for the return movement of the rotor (5) or of the compressor piston (8).

9. Method according to any one of claims 6 to 8, **characterised in that** further time instants are detected at which the rotor (5) and/or the compressor piston (8) moves past further points (24) and are taken into consideration in the regulation.

10. Method according to any one of the preceding claims, **characterised in that** the coil current is switched with the help of an H-bridge (19).

11. Method according to any one of the preceding claims, **characterised in that** the drive coil (6) is controlled in drive by a square-wave signal, wherein, in particular, the keying ratio over time lies in a range of 73% to 87%, particularly in a range of 78% to 82%.

12. Method according to any one of the preceding claims, **characterised in that** during the transient the current amplitude of the coil current is so controlled that it rises monotonously, preferably linearly, wherein, in particular, a controlled operation goes over into a regulated operation as soon as the current amplitude and/or the oscillation amplitude of the reciprocating movement of the rotor (5) and/or of the compressor piston (8) exceeds a predetermined value, wherein, in particular, regulation is carried out initially to a first reversal point and subsequently to a second reversal point of the reciprocating movement.

13. Device (1) comprising a linear drive (2), which comprises a stator (4), a rotor (5) reciprocatingly movable therein along a drive axis (9), a drive coil (6) conducting coil current, and a means (10) for predictive regulation of a coil current, particularly for a linear compressor (3), which comprises the linear drive (2), a piston housing (7) and a compressor piston (8) which is drivable by the linear drive (2) to be reciprocatingly movable along a piston axis (33), **characterised in that** the coil current is regulable by the means (10) for predictive regulation of the coil current and, in particular, in such a manner that the actual coil current and the target coil current are substantially the same, wherein the current amplitude of the coil current is controlled during a transient.

14. Device (1) according to claims 13, **characterised in that** means (10) for regulating the coil current comprises at least one of the following features (β1) to (β4):

(β1) a means (13) for predicting a future actual coil current is provided and the instantaneous target coil current is regulable with consideration of the prediction;
(β2) a means (34) for determining a target coil current is provided and a target coil current is determinable in dependence on an instantaneous and/or future actual position of the rotor (5) or of the compressor piston (8);
(β3) a means (13) for predicting a future actual coil current is provided, by which the instantaneous and/or future actual position of the rotor (5) or of the compressor piston (8) is or are determinable in dependence on the last 2 to 20, particularly 4 to 10, oscillation periods; and
(β4) a means (13) for predicting a future actual coil current is provided, by which the future actual position can be anticipated with consideration of a trend of the reciprocating movement of the rotor (5) and/or of the compressor piston (8) over the last 2 to 20, particularly 4 to 10, oscillation periods.

15. Device (1) according to claim 13 or 14, further comprising

- a first detecting means (14) for detecting a first time instant at which the rotor (5) and/or the compressor piston (8) moves or move past a first point (11) during the forward movement thereof and for detecting a second time instant at which the rotor (5) and/or the compressor piston (8) moves or move past the first point (11) during the return movement thereof,
- a second detecting means (15) for detecting a third time instant at which the rotor (5) and/or the compressor piston (8) moves or move past a second point (12), which is offset with respect to the first point (11) along the axis (9, 33), during the forward movement thereof and for detecting a fourth time instant at which the rotor (5) and/or the compressor piston (8) moves or move past the second point (12), which is offset with respect to the first point (11) along the axis (9, 33), during the return movement thereof,
- a calculating means (16) for calculating an instantaneous and/or future position of the rotor (5) and/or of the compressor piston (8) by means of interpolation or extrapolation from the instantaneous and/or past time instants,
- a comparison means (17) for comparing the calculated position with a predetermined movement plot and
- a control means (18) for controlling drive of the rotor (5) and/or of the compressor piston (8) in correspondence with the comparison result.

16. Device (1) according to claim 15, **characterised by** further detecting means (23) for detecting further time instants at which the rotor (5) and/or the compressor piston (8) moves or move past a further point (24) during a reciprocating movement.

17. Device (1) according to any one of the preceding claims 13 to 16, **characterised in that** an H-bridge (19) for switching the coil current is provided.

18. Device (1) according to any one of the preceding claims 13 to 17, **characterised in that** the regulation provides a keying ratio over time in a range of 73% to 87%, particularly in a range of 78% to 82%.

19. Device (1) according to any one of the preceding claims 13 to 18, **characterised in that** the first point (11) and/or the second point (12) lies in the vicinity of the reversal points (21, 22) of the reciprocating movement, particularly in a range of 73% to 87%, preferably in a range of 78% to 82%, of the amplitude of the reciprocating movement.

20. Device (1) according to any one of the preceding claims 13 to 19, **characterised in that** the calculating means comprises an averaging means, whereby a future actual position is determinable in dependence on the last 2 to 20, particularly 4 to 10, oscillation periods.

21. Device (1) according to any one of the preceding claims 13 to 20, **characterised in that** it is a cooling appliance (20), particularly a refrigerator and/or freezer, or an air-conditioning installation.

22. Device (1) according to any one of the preceding claims 13 to 21, **characterised in that** at least one of the detecting means (14, 15) for detecting the time instants at which the rotor (5) and/or the compressor piston (8) moves or move past a point (11, 12) during the forward movement thereof is arranged at a position between 20% and 10%, particularly between 17% and 12%, of the spacing between the reversal points (21, 22) in front of a reversal point (21, 22).

23. Method for cooling a product (25) and/or for compressing a fluid (32), **characterised in that** it uses a device (1) according to any one of claims 13 to 21 and/or a regulating method according to any one of claims 1 to 12.

**Revendications**

1. Procédé de régulation prédictive d'un entraînement linéaire (2) qui présente un stator (4), un rotor (5), déplaçable en va-et-vient dans le stator le long d'un axe d'entraînement (9), et une bobine d'entraînement (6) traversée par un courant de bobine, notamment pour un compresseur linéaire (3) qui présente un carter de piston (7) et un piston de compresseur (8) déplaçable en va-et-vient, entraîné par l'entraînement linéaire (2) dans le carter de piston le long d'un axe de piston (33), **caractérisé en ce que** le courant de bobine est réglé, à savoir de manière à ce que le courant de bobine réel et le courant de bobine théorique soient essentiellement identiques, l'amplitude de courant du courant de bobine étant commandée pendant une oscillation transitoire.

2. Procédé selon la revendication 1, **caractérisé en ce qu'**un courant de bobine théorique est déterminé en fonction d'une position réelle momentanée et/ou future du rotor (5) resp. du piston de compresseur (8).

3. Procédé selon la revendication 2, **caractérisé en ce que** la position réelle momentanée et/ou future du rotor (5) resp. du piston de compresseur (8) est déterminée en fonction des 2 à 20, notamment des 4 à 10 dernières périodes d'oscillation.

4. Procédé selon la revendication 3, **caractérisé en ce que** la position réelle future est anticipée en tenant compte d'une tendance du mouvement de va-et-vient pendant les 2 à 20, notamment les 4 à 10 dernières périodes d'oscillation.

5. Procédé selon l'une quelconque des revendications précédentes, **caractérisé en ce qu'**un potentiel courant de bobine réel futur est anticipé et **en ce que** le courant de bobine théorique momentané est réglé en tenant compte de la prévision.

**6.** Procédé selon l'une quelconque des revendications précédentes, **caractérisé par** les étapes suivantes :

- enregistrement d'un premier moment auquel le rotor (5) et/ou le piston de compresseur (8) passent à un premier endroit (11) lors de leur mouvement aller,
- enregistrement d'un deuxième moment auquel le rotor (5) et/ou le piston de compresseur (8) passent au premier endroit (11) lors de leur mouvement retour,
- enregistrement d'un troisième moment auquel le rotor (5) et/ou le piston de compresseur (8) passent à un deuxième endroit (12) décalé par rapport au premier endroit (11) le long de l'axe (9, 33) lors de leur mouvement aller,
- enregistrement d'un quatrième moment auquel le rotor (5) et/ou le piston de compresseur (8) passent au deuxième endroit (12) décalé par rapport au premier endroit (11) le long de l'axe (9, 33) lors de leur mouvement aller,
- calcul d'une position réelle momentanée et/ou future du rotor (5) et/ou du piston de compresseur (8) au moyen d'une interpolation resp. d'une extrapolation à partir des moments,
- comparaison de la position réelle calculée avec une courbe de mouvement théorique prédéterminée, et
- commande du rotor (5) et/ou du piston de compresseur (8) de manière correspondant au résultat de la comparaison.

**7.** Procédé selon la revendication 6, **caractérisé en ce que** l'interpolation et/ou l'extrapolation sont réalisées à l'aide de fonctions d'approximation, notamment de fonctions circulaires, telles que fonctions cosinus ou sinus, polynômes ou splines.

**8.** Procédé selon la revendication 7, **caractérisé en ce que** le calcul est réalisé à l'aide d'une première fonction d'approximation, notamment d'une première fonction circulaire ayant une première phase, fréquence et/ou amplitude, pour le mouvement aller du rotor (5) resp. du piston de compresseur (8), et d'une deuxième fonction d'approximation, notamment d'une deuxième fonction circulaire ayant une deuxième phase, fréquence et/ou amplitude, pour le mouvement retour du rotor (5) resp. du piston de compresseur (8).

**9.** Procédé selon l'une quelconque des revendications précédentes 6 à 8, **caractérisé en ce que** des moments supplémentaires sont enregistrés, auxquels le rotor (5) et/ou le piston de compresseur (8) passent à des endroits supplémentaires (24), et **en ce qu'**ils sont pris en compte lors de la régulation.

**10.** Procédé selon l'une quelconque des revendications précédentes, **caractérisé en ce que** le courant de bobine est connecté à l'aide d'un pont H (19).

**11.** Procédé selon l'une quelconque des revendications précédentes, **caractérisé en ce que** la bobine d'entraînement (6) est commandée au moyen d'un signal rectangulaire, notamment le taux d'impulsions temporel étant situé dans une plage de 73% à 87%, notamment dans une plage de 78% à 82%.

**12.** Procédé selon l'une quelconque des revendications précédentes, **caractérisé en ce que** pendant l'oscillation transitoire, l'amplitude de courant du courant de bobine est commandée de manière à ce qu'elle soit augmentée monotonement, de préférence linéairement, notamment un régime commandé se transformant en un régime régulé dès que l'amplitude de courant et/ou l'amplitude d'oscillation du mouvement de va-et-vient du rotor (5) et/ou du piston de compresseur (8) dépassent une valeur prédéterminée, notamment d'abord un premier point d'inversion et ensuite un deuxième point d'inversion du mouvement de va-et-vient étant réglés.

**13.** Dispositif (1) comprenant un entraînement linéaire (2) qui présente un stator (4), un rotor (5) déplaçable en va-et-vient dans le stator le long d'un axe d'entraînement (9), une bobine d'entraînement (6) traversée par un courant de bobine et un moyen (10) destiné à la régulation prédictive d'un courant de bobine, notamment pour un compresseur linéaire (3) qui présente l'entraînement linéaire (2), un carter de piston (7) et un piston de compresseur (8) déplaçable en va-et-vient, entraîné par l'entraînement linéaire (2) dans le carter de piston le long d'un axe de piston (33), **caractérisé en ce que** le courant de bobine est réglable à l'aide du moyen (10) destiné à la régulation prédictive du courant de bobine, à savoir de manière à ce que le courant de bobine réel et le courant de bobine théorique soient essentiellement identiques, l'amplitude de courant du courant de bobine étant commandée pendant une oscillation transitoire.

**14.** Dispositif selon la revendication 13, **caractérisé en ce que** le moyen (10) destiné à régler le courant de bobine présente au moins une des caractéristiques suivantes (β1) à (β4) :

(β1) un moyen (13) destiné à prévoir un courant de bobine réel futur est ménagé et le courant de bobine théorique momentané est réglable en tenant compte de la prévision ;

(β2) un moyen (34) destiné à déterminer un courant de bobine théorique est ménagé et un courant de bobine théorique est déterminable en fonction d'une position réelle momentanée et/ou future du rotor (5) resp. du piston de compresseur (8) ;

(β3) un moyen (13) destiné à prévoir un courant de bobine réel futur est ménagé, à l'aide duquel la position réelle momentanée et/ou future du rotor (5) resp. du piston de compresseur (8) est déterminable en fonction des 2 à 20, notamment des 4 à 10 dernières périodes d'oscillation ;

(β4) un moyen (13) destiné à prévoir un courant de bobine réel futur est ménagé, à l'aide duquel la position réelle future du rotor (5) resp. du piston de compresseur (8), en tenant compte d'une tendance du mouvement de va-et-vient du rotor (5) et/ou du piston de compresseur (8), peut être anticipée pendant les 2 à 20, notamment les 4 à 10 dernières périodes d'oscillation.

**15.** Dispositif (1) selon la revendication 13 ou 14, comprenant en outre

- un premier moyen d'enregistrement (14) destiné à enregistrer un premier moment auquel le rotor (5) et/ou le piston de compresseur (8) passent à un premier endroit (11) lors de leur mouvement aller, et destiné à enregistrer un deuxième moment auquel le rotor (5) et/ou le piston de compresseur (8) passent au premier endroit (11) lors de leur mouvement retour,
- un deuxième moyen d'enregistrement (15) destiné à enregistrer un troisième moment auquel le rotor (5) et/ou le piston de compresseur (8) passent à un deuxième endroit (12) décalé par rapport au premier endroit (11) le long de l'axe (9, 33) lors de leur mouvement aller, et destiné à enregistrer un quatrième moment auquel le rotor (5) et/ou le piston de compresseur (8) passent à un deuxième endroit (12) décalé par rapport au premier endroit (11) le long de l'axe (9, 33) lors de leur mouvement aller,
- un moyen de calcul (16) destiné à calculer une position momentanée et/ou future du rotor (5) et/ou du piston de compresseur (8) au moyen d'une interpolation resp. d'une extrapolation à partir des moments momentanés et/ou passés,
- un moyen de comparaison (17) destiné à comparer la position calculée à l'aide d'une courbe de mouvement prédéterminée, et
- un moyen de commande (18) destiné à commander le rotor (5) et/ou le piston de compresseur (8) de manière correspondant au résultat de la comparaison.

**16.** Dispositif (1) selon la revendication 15, **caractérisé par** des moyens d'enregistrement supplémentaires (23) destinés à enregistrer des moments supplémentaires, auxquels le rotor (5) et/ou le piston de compresseur (8) passent à un endroit supplémentaire (24) lors de leur mouvement d'aller resp. de retour.

**17.** Dispositif (1) selon l'une quelconque des revendications 13 à 16, **caractérisé en ce qu'**un pont H (19) est ménagé pour commuter le courant de bobine.

**18.** Dispositif (1) selon l'une quelconque des revendications 13 à 17, **caractérisé en ce que** la régulation prévoit un taux d'impulsions temporel situé dans une plage de 73% à 87%, notamment dans une plage de 78% à 82%.

**19.** Dispositif (1) selon l'une quelconque des revendications 13 à 18, **caractérisé en ce que** le premier (11) et/ou le deuxième (12) endroits sont situés à proximité du point d'inversion (21, 22) du mouvement de va-et-vient, notamment dans une plage de 73% à 87%, de préférence dans une plage de 78% à 82% de l'amplitude du mouvement de va-et-vient.

**20.** Dispositif (1) selon l'une quelconque des revendications 13 à 19, **caractérisé en ce que** le moyen de calcul présente un moyen de détermination de moyenne, sur quoi une position réelle future est déterminable en fonction des 2 à 20, notamment des 4 à 10 dernières périodes d'oscillation.

**21.** Dispositif (1) selon l'une quelconque des revendications 13 à 20, **caractérisé en ce qu'**il est un appareil frigorifique (20), notamment un réfrigérateur et/ou un congélateur ou une installation de climatisation.

**22.** Dispositif (1) selon l'une quelconque des revendications 13 à 21, **caractérisé en ce qu'**au moins un des moyens d'enregistrement (14, 15) destinés à enregistrer des moments auxquels le rotor (5) et/ou le piston de compresseur (8) passent à un endroit (11, 12) lors de leur mouvement aller, est disposé devant un point d'inversion (21, 22) à un endroit compris entre 20% et 10%, notamment entre 17% et 12% de l'écart entre les points d'inversion (21, 22).

23. Procédé de refroidissement d'une marchandise (25) et/ou de compression d'un fluide (32), **caractérisé en ce qu'**il utilise un dispositif (1) selon l'une quelconque des revendications 13 à 21 et/ou un procédé de régulation selon l'une quelconque des revendications 1 à 12.

**Fig. 1**

**Fig. 2**

**Fig. 3**

**Fig. 4**

**Fig. 5**

**Fig. 6**

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2417443
- WO 0148379 A1
- US 20030021693 A1
- WO 0171186 A2
- WO 03081040 A1
- US 5980211 A